(19) Europäisches Patentamt / European Patent Office / Office européen des brevets

(11) **EP 4 576 725 A1**

(12) **EUROPEAN PATENT APPLICATION**
published in accordance with Art. 153(4) EPC

(43) Date of publication:
**25.06.2025 Bulletin 2025/26**

(21) Application number: **23864414.0**

(22) Date of filing: **26.06.2023**

(51) International Patent Classification (IPC):
**H04L 47/50** (2022.01)

(52) Cooperative Patent Classification (CPC):
**H04L 47/50; H04L 47/56; H04L 47/62**

(86) International application number:
**PCT/CN2023/102437**

(87) International publication number:
**WO 2024/055675 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022 CN 202211126319**

(71) Applicant: **ZTE Corporation**
**Shenzhen, Guangdong 518057 (CN)**

(72) Inventor: **PENG, Shaofu**
**Shenzhen, Guangdong 518057 (CN)**

(74) Representative: **Deambrogi, Edgardo et al**
**Jacobacci & Partners S.p.A.**
**Corso Emilia 8**
**10152 Torino (IT)**

(54) **MESSAGE SCHEDULING METHOD, NETWORK DEVICE, STORAGE MEDIUM, AND COMPUTER PROGRAM PRODUCT**

(57) Provided in the present application are a message scheduling method, a network device, a storage medium, and a computer program product. The method comprises: acquiring an allowable queuing delay of a target message in a shaper queue (S110); acquiring a sending countdown time of a forwarding queue, wherein the sending countdown time comprises a first sending countdown time and a second sending countdown time (S120), the first sending countdown time corresponding to the first sub-block in the forwarding queue, and the second sending countdown time corresponding to the last sub-block in the forwarding queue; comparing the allowable queuing delay with the first sending countdown time and the second sending countdown time, so as to obtain comparison results (S130); and scheduling the target message according to the comparison results (S140).

**Fig. 2**

```
┌────────────────────────────────────────────────────────────┐
│ Acquiring an allowable queuing delay of a target packet in  │──⟋ S110
│ a shaper queue                                              │
└────────────────────────────────────────────────────────────┘
                            │
                            ▼
┌────────────────────────────────────────────────────────────┐
│ Acquiring a sending countdown time of at least one          │──⟋ S120
│ forwarding queue, wherein the sending countdown time        │
│ includes a first sending countdown time and a second        │
│ sending countdown time                                      │
└────────────────────────────────────────────────────────────┘
                            │
                            ▼
┌────────────────────────────────────────────────────────────┐
│ Comparing the allowable queuing delay with the first        │──⟋ S130
│ sending countdown time and the second sending countdown     │
│ time to acquire a comparison result                         │
└────────────────────────────────────────────────────────────┘
                            │
                            ▼
┌────────────────────────────────────────────────────────────┐
│ Scheduling the target packet according to the comparison    │──⟋ S140
│ result                                                      │
└────────────────────────────────────────────────────────────┘
```

## Description

### Cross-Reference to Related Application

The present application is based upon and claims the benefit of priority from Chinese Patent Application No. 202211126319.X, filed on September 16, 2022, the entire disclosure of which is incorporated herein by reference.

### Technical Field

Embodiments of the present disclosure relate to, but are not limited to, the field of network technologies, and in particular, to a packet scheduling method, a network device, a storage medium, and a computer program product.

### Background

RFC8655 describes the architecture of a deterministic network, which defines Quality of Service (QoS) objectives for deterministic forwarding, including a minimum delay and a maximum delay from a source node to a destination node, a bounded delay jitter, an allowable packet loss rate, and an upper bound on out-of-order packet delivery. To achieve these QoS objectives, a deterministic path is typically calculated before transmitting packets. The deterministic path is a strict explicit path computed by a centralized controller, and resources are reserved along this deterministic path at each node to meet Service Level Agreement (SLA) requirements of a deterministic service.

In related art, the controller specifies local deadlines for respective nodes along the deterministic path, creates a local deadline stack based on these local deadlines, and carries the local deadline stack in a packet, so as to trigger each node to forward, when its local deadline arrives, the packet carrying the local deadline stack containing its local deadline. While this approach of carrying the local deadline stack in the packet is able to satisfy deterministic delay requirements, carrying the local deadline stack in the packet increases complexity of packet scheduling. Therefore, how to reduce the complexity of packet scheduling is an urgent technical problem to be solved.

### Summary

The embodiments of the present disclosure provide a packet scheduling method, a network device, a storage medium, and a computer program product.

According to a first aspect, the embodiments of the present disclosure provide a packet scheduling method, including: acquiring an allowable queuing delay of a target packet in a shaper queue, wherein the allowable queuing delay represents a maximum queuing duration that a packet waits to be sent in a forwarding queue; acquiring a sending countdown time of at least one forwarding queue, wherein the sending countdown time includes a first sending countdown time and a second sending countdown time, the first sending countdown time corresponds to a first sub-block in the forwarding queue, and the second sending countdown time corresponds to a last sub-block in the forwarding queue; comparing the allowable queuing delay with the first sending countdown time and the second sending countdown time to acquire a comparison result; and scheduling the target packet according to the comparison result.

According to a second aspect, the embodiments of the present disclosure provide a network device, including a memory, a processor and a computer program stored in the memory and operable on the processor, wherein the processor, when executing the computer program, implements the packet scheduling method according to the first aspect.

According to a third aspect, the embodiments of the present disclosure provide a computer readable storage medium, storing computer executable instructions, wherein the computer executable instructions are used for executing the packet scheduling method according to the first aspect.

According to a fourth aspect, the embodiments of the present disclosure provide a computer program product including a computer program or computer instructions, wherein the computer program or computer instructions are stored in a computer readable storage medium, a processor of a computer device reads the computer program or the computer instructions from the computer readable storage medium, and executes the computer program or the computer instructions, so that the computer device executes the packet scheduling method according to the first aspect.

### Brief Description of the Drawings

Fig. 1 is a schematic diagram of a network topology for executing a packet scheduling method according to some embodiments of the present disclosure;

Fig. 2 is a flowchart of a packet scheduling method according to an embodiment of the present disclosure;

Fig. 3 is a flowchart of an exemplary process of operation S140 in Fig. 2;

Fig. 4 is a flowchart of an exemplary process of operation S130 in Fig. 2;

Fig. 5 is a flowchart of another exemplary process of operation S130 in Fig. 2;

Fig. 6 is a flowchart of still another exemplary process of operation S130 in Fig. 2;

Fig. 7 is a flowchart of another exemplary process of operation S140 in Fig. 2;

Fig. 8 is a flowchart of another exemplary process of operation S610 in Fig. 7;

Fig. 9 is a flowchart of another exemplary process of operation S220 in Fig. 3;

Fig. 10 is a flowchart of a packet scheduling method according to another embodiment of the present disclosure;

Fig. 11 is a schematic diagram of sending based on target forwarding sub-queues according to an example of the present disclosure;

Fig. 12 is a schematic diagram of a sending countdown time of a queue changing with time according to an example of the present disclosure;

Fig. 13 is a schematic diagram of a sending countdown time of a queue changing with time according to another example of the present disclosure;

Fig. 14 is a schematic diagram of enqueue of a packet according to an example of the present disclosure; and

Fig. 15 is a schematic structural diagram of a network device according to an embodiment of the present disclosure.

**Detailed Description of the Embodiments**

To make the objectives, technical solutions, and advantages of the present disclosure clearer and more comprehensible, the technical solution of the present disclosure is described in detail as follows with reference to the accompanying drawings and embodiments. It should be understood that the exemplary embodiments described herein are only intended to explain the present disclosure, but not to limit the present disclosure.

It should be noted that, although a logic sequence is shown in the flowchart, in some cases, the shown or described operations may be executed in a sequence different from that in the flowchart. The terms "first" and "second" in the description, the claims, and the accompanying drawings are used to distinguish similar objects, and are not necessarily used to describe a specific sequence or order.

The embodiments of the present disclosure provide a packet scheduling method, a network device, a storage medium, and a computer program product. An allowable queuing delay of a target packet in a shaper queue is acquired, wherein the allowable queuing delay represents a maximum queuing duration that a packet waits to be sent in a forwarding queue; a sending countdown time of at least one forwarding queue is acquired, wherein the sending countdown time includes a first sending countdown time and a second sending countdown time, the first sending countdown time corresponds to a first sub-block in the forwarding queue, and the second sending countdown time corresponds to a last sub-block in the forwarding queue; then, the allowable queuing delay is compared with the first sending countdown time and the second sending countdown time to acquire a comparison result; and then the target packet is scheduled according to the comparison result. As such, the local node only needs to schedule the target packet according to the allowable queuing delay of the target packet and the sending countdown time of the forwarding queue, and it is not required to carry a local deadline stack in a packet, and therefore, the complexity of packet scheduling may be reduced.

The embodiments of the present disclosure will be further described below with reference to the accompanying drawings.

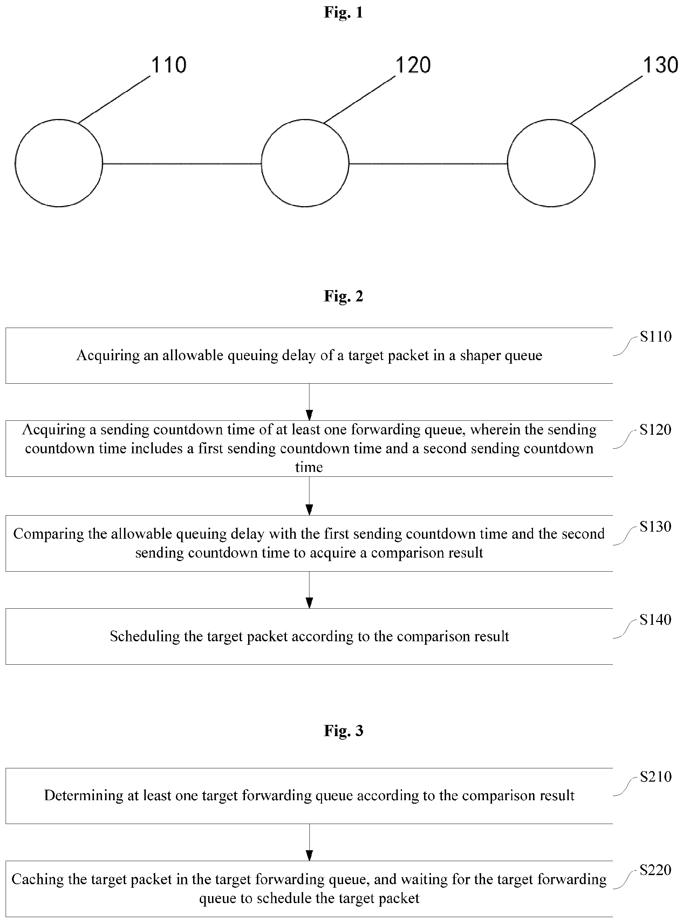

As shown in Fig. 1, Fig. 1 is a schematic diagram of a network topology for executing a packet scheduling method according to some embodiments of the present disclosure. In the example shown in Fig. 1, the network topology includes a first node 110, a second node 120, and a third node 130. A deterministic delay path passing the second node 120 is established between the first node 110 and the third node 130. The first node 110, the second node 120, and the third node 130 may all be routers or switches or other network devices capable of forwarding packets.

In this network topology, each node maintains one or more forwarding queues (also known as Deadline queues) for certain specific outgoing ports, each forwarding queue having a sending countdown time (Countdown Time, CT) and an authorization sending time (or Authorization Time, AT). There may be one or more Deadline queues and the number of the Deadline queues may be appropriately set according to the actual application situation. These Deadline queues have the following characteristics:

(1) The sending countdown time of each Deadline queue decreases over time. The smaller the value of the sending countdown time, the higher the scheduling priority of the corresponding Deadline queue. A cyclic timer may be set within the node to decrement the sending countdown times of all Deadline queues. That is, whenever the cyclic timer expires, the sending countdown times of all Deadline queues are reduced by the time interval of the cyclic timer. For example, in a case where the time interval of the cyclic timer is 1 microsecond (us), whenever the cyclic timer expires, the sending countdown times of all Deadline queues are reduced by 1us.

The time interval of the cyclic timer is a step value by which the sending countdown times of the Deadline queues decrease. This time interval should be less than authorization sending times of the Deadline queues and should satisfy $AT=N*I$, where I represents the time interval and N is an integer greater than 1. Additionally, the time interval of the cyclic timer should be fine enough to sense the differences in delay requirements between packets. For instance, if the delay requirements between packets differ by only a few microseconds, the time interval of the cyclic timer may be 1 microsecond.

Initially, among all Deadline queues, the initial values of the sending countdown times (i.e., the first sending countdown times) of the respective Deadline queues are staggered, meaning that at any given time, there is at most only one Deadline queue whose sending countdown time decrements to 0.

(2) When the sending countdown time decrements to 0, the scheduling priority of the corresponding Deadline queue is set to the highest, thereby immediately gaining the opportunity to schedule packets and prohibiting the caching of new packets. The packets already cached in this Deadline queue are immediately sent out from the outgoing port. The longest duration allowed for the Deadline queue to send packets is the preset authorization sending time. The Deadline queue will send all cached packets within this authorization sending time. If there is leftover time in the authorization sending time after all the packets in the Deadline queue have been sent, another Deadline queue with the next highest priority may continue to schedule its packets during this idle authorization sending time.

Furthermore, as $AT=N*I$ indicates, the authorization sending time of the Deadline queue is divided into N equal parts by the time interval I of the cyclic timer, which is equivalent to physically dividing the Deadline queue into N sub-windows (or sub-blocks). The packets in the first sub-window at the head of the Deadline queue will be sent within the first part of the time interval, and so on, with the packets in the Nth sub-window at the tail of the Deadline queue being sent within the Nth part of the time interval. Therefore, the CT of the Deadline queue is the sending countdown time of the first sub-window (i.e., the first sending countdown time), while CT+I is the sending countdown time of the second sub-window, and so on, with CT+AT-I being the sending countdown time of the Nth sub-window (i.e., the second sending countdown time). For ease of description, the sending countdown time of the first sub-window is denoted as $CT_1$, and so on, with the sending countdown time of the Nth sub-window being denoted as $CT_N$.

(3) For a Deadline queue whose sending countdown time has decremented to 0, after the authorization sending time has passed, the sending countdown time of the Deadline queue will be restored to a preset maximum initial value (i.e., MAX_CT). At this point, the scheduling priority of the Deadline queue is not the highest, and the Deadline queue is allowed to cache new packets, allowing the Deadline queue to enter the next round of countdown time decrement operation as time progresses.

Specifically, for a Deadline queue whose sending countdown time has decremented to 0, during the subsequent authorization sending time, the sending countdown time of the Deadline queue may remain at 0 until the authorization sending time is up before being restored to the maximum initial value. Alternatively, for a Deadline queue whose sending countdown time has decremented to 0, during the subsequent authorization sending time, the sending countdown time of the Deadline queue may continue to decrement into a negative number until the authorization sending time is up before being restored to the maximum initial value.

(4) For a Deadline queue whose sending countdown time does not decrement to 0, the Deadline queue is allowed to cache packets. In a case where the Deadline queue is in an on-time mode, the Deadline queue cannot participate in queue scheduling, that is, the Deadline queue cannot send the cached packets. In a case where the Deadline queue is in an in-time mode, the Deadline queue may participate in queue scheduling, and when the Deadline queue may participate in queue scheduling, a scheduling priority of the Deadline queue in queue scheduling depends on the sending countdown time of the Deadline queue. For example, the Deadline queue may be unable to send packets because it is not selected by the node, or may send a part of packets because it is selected by the node, or may send more packets because it is selected by the node for many times.

(5) In a specific implementation, a Deadline queue may also include multiple sub-queues (i.e., forwarding sub-queues), and the multiple forwarding sub-queues may be maintained according to their respective planned residence times (denoted as D). Here, the Deadline queue may be considered as a logical virtual queue or as a sub-queue group composed of multiple sub-queues. Therefore, packets are actually cached in sub-queues. That is to say, multiple sub-queues belonging to the same Deadline queue have the same sending countdown time but different planned residence times. This is advantageous for further sorting the scheduling of respective sub-queues within the Deadline queue based on the planned residence times, wherein the sub-queue with the smaller planned residence time is scheduled first.

Additionally, to ensure that all packets cached in all sub-queues included in the Deadline queue can be sent within the authorization sending time of the Deadline queue, it is suggested to ensure that a total bit quantity (denoted as sum_bits) of packets cached by all the sub-queues in the Deadline queue satisfies sum_bits<= AT*C-M, where AT represents the authorization sending time of the Deadline queue, C represents the bandwidth of the outgoing port (with units in bits per second), and M represents the length of the largest low-priority interference frame (with units in bits). In a specific implementation, a block of storage space may be pre-allocated for a Deadline queue, with the length of the storage space being AT*C-M, and then all sub-queues within the Deadline queue share this storage space. When a packet needs to be inserted into a sub-queue of the Deadline queue and the storage space corresponding to this Deadline queue is exhausted, the packet is prohibited from being inserted into this Deadline queue. Therefore, the packet may be inserted into other Deadline queues following this Deadline queue.

The network topology and application scenarios described in the embodiments of the present disclosure are for the purpose of more clearly illustrating the technical solution of the embodiments of the present disclosure and do not constitute a limitation on the technical solution provided by the embodiments of the present disclosure. Those having ordinary skill in the art will understand that as network topologies evolve and new application scenarios emerge, the technical solution provided by the embodiments of the present disclosure is equally applicable to similar technical issues.

Those having ordinary skill in the art will understand that the topology shown in Fig. 1 does not constitute a limitation on the embodiments of the present disclosure and may include more or fewer components than shown components, combine certain components, or arrange different components.

Based on the structure of the aforementioned network topology, various embodiments of the packet scheduling method of the present disclosure are described as follows.

Referring to Fig. 2, Fig. 2 is a flowchart of a packet scheduling method according to an embodiment of the present disclosure. The packet scheduling method may be applied to a node in a network, for example, the first node 110 or the second node 120 in the network topology shown in Fig. 1. The packet scheduling method includes but is not limited to operation S110, operation S120, operation S130, and operation S140.

In operation S110, an allowable queuing delay of a target packet in a shaper queue is acquired.

In this operation, the allowable queuing delay represents a maximum queuing duration that a packet waits to be sent in a forwarding queue. The shaper queue is a First Input First Output (FIFO) queue of a shaper instance, and the target packet is a packet at the head of the shaper queue. Additionally, target packets in the same shaper queue share some commonalities, such as coming from the same incoming port, having the same planned residence time, belonging to the same data flow, etc., which may be known based on the granularity used to create the shaper instance. The planned residence time represents a maximum residence time of the packet in a local node, which is not specifically limited in the present disclosure.

In an embodiment, before acquiring the allowed queuing delay of the target packet in the shaper queue, multiple shaper instances are maintained. For example, different shaper instances may be created based on the granularity of "incoming port+planned residence time", each with its own FIFO queue, where the same FIFO queue caches packets received from the same incoming port with the same planned residence time. When a node receives a packet to be forwarded at the incoming port, the packet is cached in the FIFO queue of the corresponding shaper instance. Therefore, target packets from the same incoming port and with the same planned residence time may be acquired from the same FIFO queue (i.e., the shaper queue). For another example, different shaper instances may be created based on the granularity of "planned residence time", each with its own FIFO queue, where the same FIFO queue caches packets with the same planned residence time. As such, when a node receives a packet to be forwarded (or produces a packet to be forwarded from the local control plane) at the incoming port, the packet may be cached in the FIFO queue of the corresponding shaper instance based on the planned residence time of the packet. Therefore, target packets with the same planned residence time may be acquired from the same FIFO queue (i.e., the shaper queue). It may be understood that the FIFO queue of the shaper instance may classify packets based on the granularity. It should be understood that the granularity used to create different shaper instances includes but is not limited to "incoming port+planned residence time". The granularity can alternatively be per "flow", per "incoming port", per "incoming port+flow", or per "planned residence time", where "flow" refers to the data flow, and this embodiment does not place specific restrictions on this.

In an embodiment, the allowed queuing delay may be acquired based on the planned residence time of the packet within the node, plus a cumulative delay deviation, minus a forwarding delay of the packet within the node (which includes the waiting time of the packet in the shaper queue). It may be understood that if the actual queuing delay of a packet at the current node is greater than the allowed queuing delay, the packet may have a smaller allowed queuing delay at downstream nodes; conversely, if the actual queuing delay of a packet at the current node is less than the allowed queuing delay, the packet may have a larger allowed queuing delay at downstream nodes.

In operation S120, a sending countdown time of at least one forwarding queue is acquired, wherein the sending countdown time includes a first sending countdown time and a second sending countdown time.

In this operation, the first sending countdown time corresponds to a first sub-block in the forwarding queue, and the second sending countdown time corresponds to a last sub-block in the forwarding queue. It may be understood that, in the sending countdown times corresponding to all the sub-blocks in the forwarding queue, the first sending countdown time corresponding to the first sub-block in the forwarding queue has the smallest numerical value, and the second sending countdown time corresponding to the last sub-block in the forwarding queue has the largest numerical value.

In an embodiment, different forwarding queues correspond to the same authorization sending time, and it is assumed that the authorization sending time of the forwarding queue is divided into N equal parts by a time interval of a cyclic timer, which means that the forwarding queue is physically divided into N sub-blocks. In such a case, the sending countdown time corresponding to the first sub-block in the forwarding queue is determined as the first sending countdown time, and the sending countdown time corresponding to the Nth sub-block (i.e., the last sub-block) in the forwarding queue is determined as the second sending countdown time, wherein N is an integer greater than 1.

In an embodiment, the sending countdown time (denoted as CT) of the forwarding queue (i.e., the Deadline queue) may be an explicitly set attribute of the forwarding queue, and the attribute (i.e., the sending countdown time) is presented externally in hardware implementation. For example, it is assumed that the forwarding queues include queue-1 and queue-2, where queue-1 with a fixed number of 1 has an explicit CT-1 attribute, and queue-2 with a fixed number of 2 has an explicit CT-2 attribute, and so on. Alternatively, the sending countdown time of the forwarding queue (i.e., the Deadline queue) may also be implicitly derived from other information about the forwarding queue, and it is not necessary to present the attribute externally during the hardware implementation. For example, the serial number of each forwarding queue may be dynamically modified each time the time period of the authorization sending time elapses, wherein the process of dynamically modifying the serial number of each forwarding queue is as follows:

$$new\_ID=(MAX\_ID+old\_ID) \bmod (MAX\_ID+1) \qquad (1)$$

In formula (1), new_ID is the new serial number of the forwarding queue, old_ID is the old serial number of the forwarding queue, MAX_ID is a preset maximum number, and MAX_ID may be set according to an actual situation. Initially, the serial number of each Deadline queue is assigned from 0~MAX_ID.

Within the time period of each authorization sending time, the number of the time intervals (denoted as I) currently experienced is denoted as count, then the CT of the Deadline queue with a queue serial number ID within the authorization sending time may be calculated dynamically according to the following formula:

$$CT=ID*AT-count*I, \text{ where } 0<=count<N \qquad (2)$$

In formula (2), CT is the sending countdown time of the Deadline queue, AT is the authorization sending time, and N is a positive integer.

It may be understood that no difference exists between the comparison result acquired by comparing the allowable queuing delay with the first sending countdown time and the second sending countdown time, whether the sending countdown time is an explicitly set attribute or an attribute implicitly derived from other information of the forwarding queue.

In operation S130, the allowable queuing delay is compared with the first sending countdown time and the second sending countdown time to acquire a comparison result.

In this operation, since the allowable queuing delay of the target packet is acquired in operation S110, and the sending countdown time of the forwarding queue is acquired in operation S120, therefore, the allowable queuing delay may be compared with the first sending countdown time and the second sending countdown time so as to acquire a comparison result, so that the target packet can be scheduled in subsequent operations according to the comparison result, thereby achieving the purpose of reducing the complexity of packet scheduling.

In operation S140, the target packet is scheduled according to the comparison result.

In this operation, since the comparison result is acquired in operation S130, the target packet can be scheduled according to the comparison result, without the need of carrying the local deadline stack in the packet, thereby reducing the complexity of packet scheduling.

In this embodiment, by adopting the packet scheduling method including the operation S110 to the operation S140, an allowable queuing delay of a target packet in a shaper queue is acquired, wherein the allowable queuing delay represents a maximum queuing duration that a packet waits to be sent in a forwarding queue; a sending countdown time of at least one forwarding queue is acquired, wherein the sending countdown time includes a first sending countdown time and a second sending countdown time, the first sending countdown time corresponds to a first sub-block in the forwarding queue, and the second sending countdown time corresponds to a last sub-block in the forwarding queue; then, the allowable queuing delay is compared with the first sending countdown time and the second sending countdown time to acquire a comparison result; and then the target packet is scheduled according to the comparison result. As such, the local node only needs to schedule the target packet according to the allowable queuing delay of the target packet and the sending countdown time of the forwarding queue, and it is not required to carry a local deadline stack in a packet, and therefore, the complexity of packet scheduling may be reduced.

Referring to Fig. 3, in an embodiment of the present disclosure, the implementation of operation S140 is further described. Operation S140 may include, but is not limited to, operation S210 and operation S220.

In operation S210, at least one target forwarding queue is determined according to the comparison result.

In this operation, the number of the target forwarding queues is not limited, and may be one or more, which may be determined according to an actual situation, and is not specifically limited herein.

In operation S220, the target packet is cached in the target forwarding queue, and the target forwarding queue is waited for to schedule the target packet.

It may be understood that the sending countdown time of each target forwarding queue decreases with the elapse of time, and the smaller the value of the sending countdown time is, the higher the scheduling priority of the corresponding target forwarding queue is. Furthermore, different target forwarding queues correspond to different sending countdown times.

In an embodiment, when the sending countdown time does not decrement to 0, the target forwarding queue corresponding to the sending countdown time fails to schedule the target packet immediately, that is, it is needed to wait for the target forwarding queue to schedule the target packet; when the sending countdown time decrements to 0, the scheduling priority of the target forwarding queue corresponding to the sending countdown time may be set to be the highest, and in such a case, the target forwarding queue may schedule the target packet, which is not specifically limited in the embodiment of the present disclosure.

In an embodiment, it is assumed that there are two target forwarding queues, i.e., a target forwarding queue A and a target forwarding queue B, and the sending countdown time of the target forwarding queue A decrements to 0 first, then the target forwarding queue A may schedule a target packet cached in the target forwarding queue A when the sending countdown time of the target forwarding queue A decrements to 0; after the authorization sending time, the sending countdown time of the target forwarding queue B decrements to 0, and the sending countdown time of the target forwarding queue A is restored to a preset maximum numerical value, and the target forwarding queue B may schedule the target packet cached in the target forwarding queue B.

In an embodiment, there are a plurality of forwarding queues, and different forwarding queues correspond to different storage spaces, and in the case where there are a plurality of target forwarding queues, when the storage space corresponding to the target forwarding queue is exhausted, the target packet is prohibited from being cached in the target forwarding queue, and the target packet may be cached in a next target forwarding queue. The length of the storage space may be set as AT*C-M, wherein AT represents the authorization sending time of the Deadline queue, C represents the bandwidth of the outgoing port (the unit of C is bit/s), and M represents the maximum length of the interference frame with low priority (the unit of M is bit).

In this embodiment, by adopting the packet scheduling method including the described operations S210 to S220, at least one target forwarding queue may be determined according to a comparison result, and the target packet is cached in the target forwarding queue, waiting for the target forwarding queue to schedule the target packet. In this way, there is no need to carry a local deadline stack in the packet, and therefore the complexity of packet scheduling may be reduced.

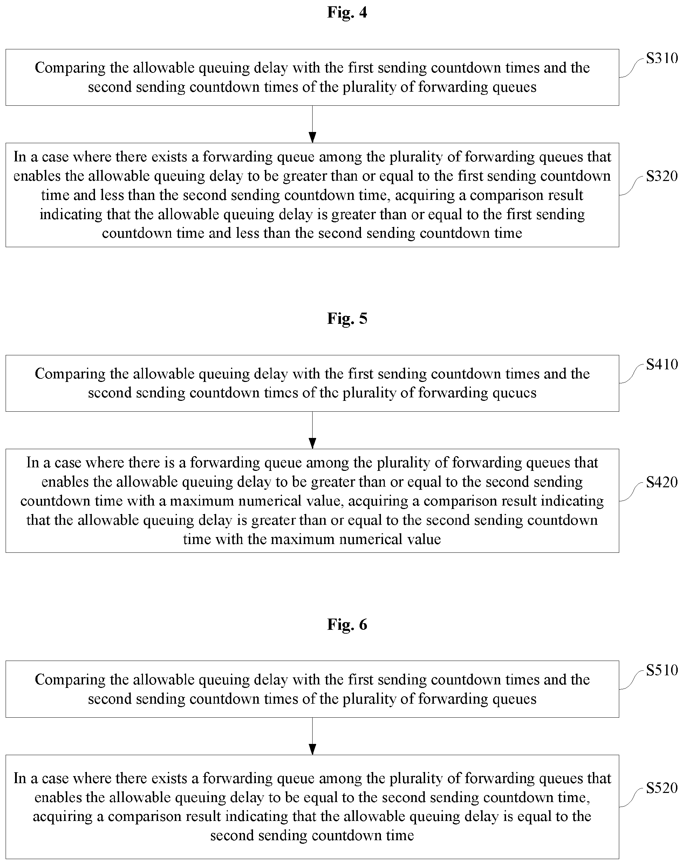

Referring to Fig. 4, in an embodiment of the present disclosure, operation S130 is further described. When there are a plurality of forwarding queues, different forwarding queues correspond to different sending countdown times, and different sending countdown times include different first sending countdown times and different second sending countdown times, operation S130 may include, but is not limited to, operation S310 and operation S320.

In operation S310, the allowable queuing delay is compared with the first sending countdown times and the second sending countdown times of the plurality of forwarding queues.

In this operation, the first sending countdown time and the second sending countdown time are in one-to-one correspondence, that is, the allowable queuing delay is compared with the first sending countdown time and the second sending countdown time of the same forwarding queue, rather than the allowable queuing delay being compared with the first sending countdown time of one forwarding queue and the second sending countdown time of another forwarding queue. Furthermore, the allowable queuing delay may be compared with the first sending countdown time and the second sending countdown time of each of a plurality of forwarding queues simultaneously, or the allowable queuing delay may be compared with the first sending countdown time and the second sending countdown time of the plurality of forwarding queues sequentially, and the like. For example, the plurality of forwarding queues are sorted according to the first sending countdown time of the forwarding queue or the second sending countdown time of the forwarding queue, the allowable queuing delay may be compared in turn with the first sending countdown time and the second sending countdown time of the sorted forwarding queue, no specific limitation is set herein.

In operation S320, in a case where there exists a forwarding queue among the plurality of forwarding queues that enables the allowable queuing delay to be greater than or equal to the first sending countdown time and less than the second sending countdown time, a comparison result indicating that the allowable queuing delay is greater than or equal to the first sending countdown time and less than the second sending countdown time is acquired.

In this embodiment, a plurality of forwarding queues (i.e., Deadline queues) may be disposed in a node, and therefore, after operation S 110 is executed to acquire an allowable queuing delay of a target packet, and operation S120 is executed to acquire the sending countdown times of the plurality of forwarding queues, the allowable queuing delay may be compared with the first sending countdown times and the second sending countdown times of the plurality of forwarding queues, when there is a forwarding queue among the plurality of forwarding queues that enables the allowable queuing delay to be greater than or equal to the first sending countdown time and less than the second sending countdown time, a comparison result indicating that the allowable queuing delay is greater than or equal to the first sending countdown time and less than the second sending countdown time may be acquired, so that in subsequent operations, at least one target forwarding queue may be determined according to the comparison result, and the target packet is scheduled by means of the target forwarding queue, thereby avoiding packet disorder when the node sends packets in the same data stream.

In an embodiment of the present disclosure, operation S210 is further described. Operation S210 may include, but is not limited to, the following operation:

in a case where the comparison result indicates that the allowable queuing delay is greater than or equal to the first sending countdown time and less than the second sending countdown time, a forwarding queue that enables the allowable queuing delay to be greater than or equal to the first sending countdown time and less than the second sending countdown time is determined as the target forwarding queue.

In this embodiment, a plurality of forwarding queues (i.e., Deadline queues) may be disposed in a node, and after operation S 110 is executed to acquire the allowable queuing delay of the target packet, and operation S120 is executed to acquire the sending countdown time of the Deadline queue, the allowable queuing delay (denoted as Q) may be compared with the first sending countdown time (denoted as $CT_1$) and the second sending countdown time (denoted as $CT_N$) of the plurality of Deadline queues so as to acquire a comparison result. In a case where the comparison result indicates that the allowable queuing delay is greater than or equal to the first sending countdown time and less than the second sending countdown time, a forwarding queue that enables the allowable queuing delay to be greater than or equal to the first sending countdown time and less than the second sending countdown time is determined as the target forwarding queue. That is, among a plurality of Deadline queues, there exists a certain Deadline queue whose $CT_1$ and $CT_N$ satisfy $CT_1 <= Q < CT_N$, then this Deadline queue is determined as the target forwarding queue, so that in subsequent operations, the target packet may be cached in the target forwarding queue and then waits to be scheduled by means of the target forwarding queue, thereby avoiding packet disorder when the node sends packets in the same data stream.

In addition, referring to Fig. 5, in an embodiment of the present disclosure, operation S130 is further described. In a case where there are a plurality of forwarding queues, different forwarding queues correspond to different sending countdown times, and different sending countdown times include different first sending countdown times and different second sending countdown times, operation S130 may include, but is not limited to, operation S410 and operation S420.

In operation S410, the allowable queuing delay is compared with the first sending countdown times and the second sending countdown times of the plurality of forwarding queues.

In this operation, the first sending countdown time and the second sending countdown time are in one-to-one correspondence, that is, the allowable queuing delay is compared with the first sending countdown time and the second sending countdown time of the same forwarding queue, rather than the allowable queuing delay being compared with the first sending countdown time of one forwarding queue and the second sending countdown time of another forwarding queue. Furthermore, the allowable queuing delay may be compared with the first sending countdown times and the second sending countdown times of the plurality of forwarding queues simultaneously, or the allowable queuing delay may be compared with the first sending countdown times and the second sending countdown times of the plurality of forwarding queues sequentially, and the like. For example, the plurality of forwarding queues may be sorted according to the first sending countdown time of the forwarding queue or the second sending countdown time of the forwarding queue, the allowable queuing delay may be compared in turn with the first sending countdown times and the second sending countdown times of the sorted forwarding queues, no specific limitation is set herein.

In operation S420, in a case where there is a forwarding queue among the plurality of forwarding queues that enables the allowable queuing delay to be greater than or equal to the second sending countdown time with a maximum numerical value, a comparison result indicating that the allowable queuing delay is greater than or equal to the second sending countdown time with the maximum numerical value is acquired.

In this embodiment, a plurality of forwarding queues (i.e., Deadline queues) may be disposed in a node, and therefore, after operation S110 is executed to acquire the allowable queuing delay of the target packet, and operation S120 is executed to acquire the sending countdown times of the plurality of forwarding queues, the allowable queuing delay may be compared with the first sending countdown times and the second sending countdown times of the plurality of forwarding queues. In a case where there exists a forwarding queue among the plurality of forwarding queues that enables the allowable queuing delay to be greater than or equal to the second sending countdown time with a maximum numerical value, a comparison result that indicates that the allowable queuing delay is greater than or equal to the second sending countdown time with the maximum numerical value is may be acquired, so that in subsequent operations, at least one target forwarding queue may be determined according to the comparison result, and the target packet may be scheduled by means of the target forwarding queue, thereby avoiding packet disorder when the node sends packets in the same data stream.

In an embodiment, operation S210 is further described. Operation S210 may include, but is not limited to, the following operation:

in a case where the comparison result indicates that the allowable queuing delay is greater than or equal to the second sending countdown time with a maximum numerical value, a forwarding queue corresponding to the second sending countdown time with the maximum numerical value is determined as the target forwarding queue.

In this embodiment, a plurality of forwarding queues (i.e., Deadline queues) may be disposed in a node, and therefore, after the operation S130 is performed to acquire the comparison result between the allowable queuing delay and the first sending countdown times and the second sending countdown times of the plurality of forwarding queues, in a case where the comparison result indicates that the allowable queuing delay is greater than or equal to the second sending countdown time with the maximum numerical value, the forwarding queue corresponding to the second sending countdown time with the maximum numerical value may be determined as the target forwarding queue, so that in subsequent operations, a target packet may be cached in the target forwarding queue, and then waits to be scheduled by means of the target forwarding queue, thereby avoiding a situation that a part of the target packets cannot be scheduled.

In another embodiment, operation S210 is further described, and operation S210 may include, but is not limited to, the following operation:

in a case where the comparison result indicates that the allowable queuing delay is greater than or equal to the second sending countdown time with the maximum numerical value, an escape queue is configured, and the escape queue is determined as the target forwarding queue, wherein the sending countdown time of the escape queue is greater than the second sending countdown time with the maximum numerical value.

In this operation, the sending countdown time of the escape queue is never decremented, and the escape queue may be configured to cache a packet with an allowable queuing delay that is greater than the second sending countdown time with the maximum numerical value.

In this embodiment, a plurality of forwarding queues (i.e., Deadline queues) may be disposed in a node, and therefore, after the operation S130 is performed to acquire the comparison result between the allowable queuing delay and the first sending countdown times and the second sending countdown times of the plurality of forwarding queues, in a case where the comparison result indicates that the allowable queuing delay is greater than or equal to the second sending countdown time with the maximum numerical value, an escape queue is configured, and the escape queue is determined as the target forwarding queue, wherein the sending countdown time of the escape queue is greater than the second sending countdown time with the maximum numerical value, so that in subsequent operations, a target packet may be cached in the target forwarding queue, and then the target packet is scheduled by means of the target forwarding queue, thereby avoiding a situation that a part of the target packets cannot be scheduled.

In addition, referring to Fig. 6, in an embodiment of the present disclosure, operation S130 is further described. In a case where there are a plurality of forwarding queues, different forwarding queues correspond to different sending countdown times, and different sending countdown times include different first sending countdown times and different second sending countdown times, operation S130 may include, but is not limited to, operation S510 and operation S520.

In operation S510, the allowable queuing delay is compared with the first sending countdown times and the second sending countdown times of the plurality of forwarding queues.

In this operation, the first sending countdown time and the second sending countdown time are in one-to-one correspondence, that is, the allowable queuing delay is compared with the first sending countdown time and the second sending countdown time of the same forwarding queue, rather than the allowable queuing delay being compared with the first sending countdown time of one forwarding queue and the second sending countdown time of another forwarding queue. Furthermore, the allowable queuing delay may be compared with the first sending countdown times and the second sending countdown times of the plurality of forwarding queues simultaneously, or the allowable queuing delay may be compared with the first sending countdown times and the second sending countdown times of the plurality of forwarding queues sequentially, and the like. For example, the plurality of forwarding queues may be sorted according to the first sending countdown time of the forwarding queue or the second sending countdown time of the forwarding queue, the allowable queuing delay is compared in turn with the first sending countdown times and the second sending countdown times of the sorted forwarding queues, no specific limitation is set herein.

In operation S520, in a case where there exists a forwarding queue among the plurality of forwarding queues that enables the allowable queuing delay to be equal to the second sending countdown time, a comparison result indicating that the allowable queuing delay is equal to the second sending countdown time is acquired.

In this embodiment, a plurality of forwarding queues (i.e., Deadline queues) may be disposed in a node, and therefore, after operation S 110 is executed to acquire the allowable queuing delay of the target packet, and operation S120 is executed to acquire the sending countdown times of the plurality of forwarding queues, the allowable queuing delay may be compared with the first sending countdown times and the second sending countdown times of the plurality of forwarding queues. In a case where there exists a forwarding queue among the plurality of forwarding queues that enables the allowable queuing delay to be equal to the second sending countdown time, a comparison result indicating that the allowable queuing delay is equal to the second sending countdown time is acquired, so as to facilitate determining at least one target forwarding queue according to the comparison result in subsequent operations, and scheduling the target packet through the target forwarding queue.

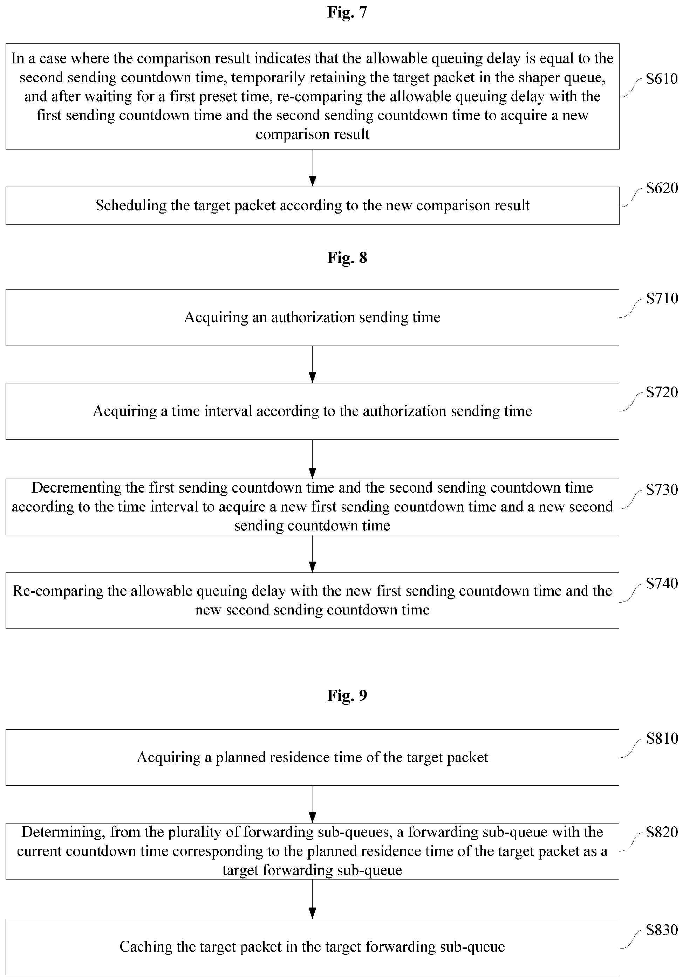

Referring to Fig. 7, in an embodiment of the present disclosure, operation S140 is further described. Operation S140 may include, but is not limited to, operation S610 and operation S620.

In operation S610, in a case where the comparison result indicates that the allowable queuing delay is equal to the second sending countdown time, the target packet is temporarily retained in the shaper queue, and after waiting for a first preset time, the allowable queuing delay is re-compared with the first sending countdown time and the second sending countdown time to acquire a new comparison result.

If the value of the first preset time is set too large, the shaper queue (i.e., the FIFO queue of the shaper instance) may cache more packets, and meanwhile, the delay of the packet in the node may be increased. Therefore, the value of the first preset time may be greater than 0 and less than a time interval of a cyclic timer; alternatively, the value of the first preset time may be greater than the time interval of the cyclic timer and less than the authorization sending time, so as to avoid the situation that too many packets are cached in the shaper queue and the delay of the packets in the node is increased due to the fact that the first preset time is too long. The time interval of the cyclic timer is a step value by which the sending countdown time of the forwarding queue (i.e., the Deadline queue) decrements. The authorization sending time represents a longest duration allowed for the forwarding queue to send the packet. For a specific description of the authorization sending time and the time interval, reference may be made to the related description in the foregoing embodiment, and details are not repeatedly described herein.

In operation S620, the target packet is scheduled according to the new comparison result.

In this embodiment, a plurality of forwarding queues (i.e., Deadline queues) may be disposed in a node, and therefore, after the operation S130 is performed to acquire the comparison result between the allowable queuing delay and the first sending countdown time and the second sending countdown time, in a case where the comparison result is that the allowable queuing delay is equal to the second sending countdown time, the target packet is temporarily retained in the shaper queue, and after waiting for the first preset time, the old allowable queuing delay is re-compared with the new first sending countdown time and the new second sending countdown time so as to acquire a new comparison result, and then the target packet is scheduled according to the new comparison result, thereby avoiding packet disorder when a node sends packets in the same data stream.

Referring to Fig. 8, an embodiment of the present disclosure further describes operation S610. Operation S610 may include, but is not limited to, operation S710, operation S720, operation S730, and operation S740.

In operation S710, an authorization sending time is acquired.

The authorization sending time represents a longest duration allowed for the forwarding queue to send the packet. For the specific description of the authorization sending time, reference may be made to the relevant description in the foregoing embodiment, and details are not repeatedly described herein.

In operation S720, a time interval is acquired according to the authorization sending time.

In this operation, a cyclic timer may be set in the node, and a time interval of the cyclic timer is a step value by which the sending countdown time of all the Deadline queues decrements. Furthermore, the time interval should be smaller than the authorization sending time, and the time interval of the cyclic timer should be set to be fine enough in order to guarantee the perception of the delay requirement difference between packets. For example, if the delay requirement difference between the packets is only a few microseconds, then the time interval of the cyclic timer may be 1 microsecond.

In operation S730, the first sending countdown time and the second sending countdown time are decremented according to the time interval to acquire a new first sending countdown time and a new second sending countdown time.

In this operation, the time interval is used to decrement the first sending countdown time and the second sending countdown time, that is to say, whenever the cyclic timer expires, the sending countdown times of all the forwarding queues are deducted by the time interval of the cyclic timer.

In operation S740, the allowable queuing delay is re-compared with the new first sending countdown time and the new second sending countdown time.

In this embodiment, in a case where the comparison result is that the allowable queuing delay is equal to the second sending countdown time, the target packet is temporarily retained in the shaper queue, after waiting for a first preset time, an authorization sending time can be acquired, a time interval is acquired according to the authorization sending time, the first sending countdown time and the second sending countdown time are then decremented according to the time interval so as to acquire a new first sending countdown time and a new second sending countdown time, and finally the old allowable queuing delay is compared with the new first sending countdown time and the new second sending countdown time to acquire a new comparison result, so as to facilitate scheduling of the target packet according to the new comparison result in subsequent operations, thereby avoiding packet disorder when the node sends packets in the same data stream.

In an embodiment, the first sending countdown time of the forwarding queue (i.e., the Deadline queue) is denoted as $CT_1$, the second sending countdown time of the forwarding queue (i.e., the Deadline queue) is denoted as $CT_N$, and the allowable queuing delay of a head packet (i.e., the target packet) is denoted as Q. When $CT_N=Q$, the FIFO queue (i.e., the shaper queue) of the corresponding shaper instance is locked, therefore, the head packet is temporarily retained in the shaper queue and the allowable queuing delay of the acquired head packet is recorded. After waiting for the first preset time (denoted as Twait), the cyclic timer used for performing the decrement operation on the sending countdown time of the Deadline queue unlocks the FIFO queues of all the shaper instances at every other time interval (denoted as I), the unlock operation will cause the FIFO queues of the shaper instances to unlock regardless of whether the FIFO queues of the shaper instances have been previously locked, and the unlock operation allows for the acquisition of the head packets of these FIFO queues. At the same time of the unlocking, a time interval is subtracted from the sending countdown times (e.g., the first sending countdown times and the second sending countdown times) of all the Deadline queues, the recorded old allowable queuing delay is re-compared with the first sending countdown time minus one time interval and the second sending countdown time minus one time interval, until a certain Deadline queue whose $CT_1$ and $CT_N$ satisfy $CT_1<=Q<CT_N$ is found, and the head packet of the shaper queue is cached in the Deadline queue, where 0<Twait<I.

In another embodiment, the first sending countdown time of the forwarding queue (i.e., a Deadline queue) is recorded as $CT_1$, the second sending countdown time of the forwarding queue (i.e., a Deadline queue) is recorded as $CT_N$, and the allowable queuing delay of the head packet (i.e., a target packet) is recorded as Q. When $CT_N=Q$, the FIFO queue of the shaper instance starts a timer with a timeout duration being T (i.e., the first preset time). After waiting for time T, the FIFO queue of the shaper instance may try again to acquire the head packet, and at the same time, the time interval (denoted as I) is subtracted from the sending countdown times (e.g., the first sending countdown times and the second sending countdown times) of all the Deadline queues, the allowable queuing delay is re-compared with the first sending countdown time minus the time interval and the second sending countdown time minus the time interval, until a certain Deadline queue whose $CT_1$ and $CT_N$ satisfy $CT_1<=Q<CT_N$ is found, the head packet of the FIFO queue is cached in the Deadline queue, where i<=T<AT, and AT is the authorization sending time. By defining the value range of the first preset time (i.e., T), the embodiments of the present disclosure may avoid situations where too many packets cached in the shaper queue and a delay of a packet in a node increase due to the fact that the first preset time is too long.

Referring to Fig. 9, in an embodiment of the present disclosure, operation S220 is further described. In a case where the target forwarding queue includes a plurality of forwarding sub-queues, different forwarding sub-queues correspond to a same sending countdown time, and different forwarding sub-queues correspond to different current countdown times, operation S220 may include but is not limited to operation S810, operation S820, and operation S830.

In operation S810, a planned residence time of the target packet is acquired.

The planned residence time represents a maximum residence time of the packet in a local node.

In operation S820, a forwarding sub-queue with the current countdown time corresponding to the planned residence time of the target packet is determined, from the plurality of forwarding sub-queues, as a target forwarding sub-queue.

In operation S830, the target packet is cached in the target forwarding sub-queue.

In this embodiment, by adopting the packet scheduling method including the above operation S810 to operation S830, in a case where the target forwarding queue includes a plurality of forwarding sub-queues, different forwarding sub-queues correspond to a same sending countdown time, and different forwarding sub-queues correspond to different current countdown times, the planned residence time of the target packet may be acquired, and then the forwarding sub-queue whose current countdown time corresponds to the planned residence time of the target packet is determined, from the plurality of forwarding sub-queues, as the target forwarding sub-queue, finally the target packet is cached to the target forwarding sub-queue, and waits to be scheduled by means of the target forwarding sub-queue. By virtue of the solution, the local deadline stack does not need to be carried in a packet, and therefore, the complexity of packet scheduling may be reduced.

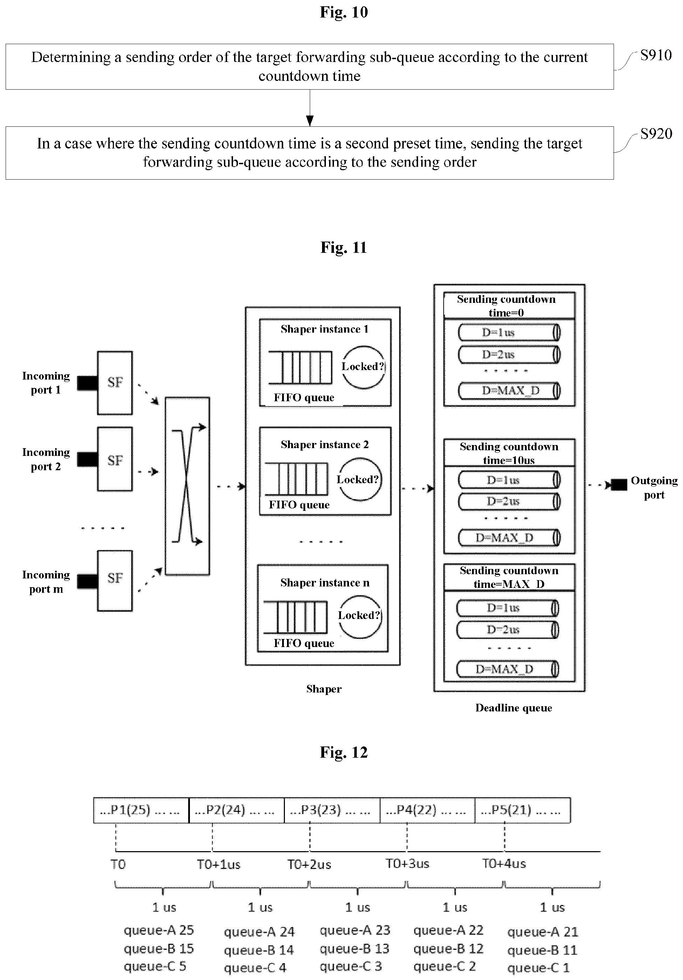

Referring to Fig. 10, in an embodiment of the present disclosure, the packet scheduling method may further include, but is not limited to, operation S910 and operation S920.

In operation S910, a sending order of the target forwarding sub-queue is determined according to the current countdown time.

In this operation, a target forwarding sub-queue with a larger current countdown time may be arranged behind a target forwarding sub-queue with a smaller current countdown time, that is, the target forwarding sub-queues corresponding to various current countdown times are sorted according to an ascending order of the numerical values of the current countdown times, wherein the target forwarding sub-queue corresponding to the current countdown time with the minimum numerical value is sent first, and the target forwarding sub-queue corresponding to the current countdown time with the maximum numerical value is sent last.

In operation S920, in a case where the sending countdown time is a second preset time, the target forwarding sub-queue is sent according to the sending order.

It may be understood that the sending countdown time of each target forwarding queue decreases with the elapse of time, when the sending countdown time is the second preset time, all target forwarding sub-queues in the target forwarding queue corresponding to the sending countdown time immediately acquire the opportunity to schedule the packets, while prohibiting caching of any new target packet, and all target forwarding sub-queues in the target forwarding queue successively send their respective cached target packets according to a sending order.

In a feasible implementation, the second preset time may be another value smaller than the current countdown time value with the smallest numerical value of all target forwarding sub-queues, such as 0 microsecond or 0.1 microsecond. For example, assuming that there are three target forwarding sub-queues whose current countdown times are respectively 10 microseconds, 7 microseconds, and 6 microseconds, then the second preset time may be a value less than 6 microseconds, such as 5 microseconds, 3 microseconds, or 0 microsecond, which is not specifically limited herein.

The sending based on the target forwarding sub-queues is specifically described below by using an example.

Referring to Fig. 11, Fig. 11 is a schematic diagram of sending based on target forwarding sub-queues according to an example of the present disclosure. In Fig. 11, it is assumed that there are one outgoing port and m incoming ports, i.e., incoming port 1, incoming port 2,... , incoming port m, where m is a positive integer, and the outgoing port maintains different shaper instances per granularity of "incoming port+planned residence time". If a packet with a corresponding planned residence time is received from a certain incoming port, the packet is inserted into the FIFO queue (i.e., the shaper queue) of the corresponding shaper instance.

It is assumed that a queue subsystem includes a plurality of Deadline queues, different Deadline queues have different sending countdown times, and the authorization sending time of each Deadline queue is 10us. When all the shaper instances concurrently acquire a head packet (i.e., a target packet) from the head of their respective FIFO queues, if the allowable queuing delay of the head packet is within the range of $[CT_1, CT_N]$ of a certain Deadline queue (wherein $CT_1$ is the first sending countdown time, and $CT_N$ is the second sending countdown time), i.e., the allowable queuing delay is greater than or equal to the first sending countdown time of a certain Deadline queue and less than the second sending countdown time of this Deadline queue, then the Deadline queue is the target forwarding queue, and the first packet is immediately inserted into a target forwarding sub-queue having a corresponding current countdown time in the target forwarding queue.

If the allowable queuing delay of the head packet is equal to $CT_N$ of a certain Deadline queue (such as Deadline queue 1), then the FIFO queue of this shaper instance will be locked, the allowable queuing delay of the head packet will be recorded, and then a cyclic timer for decrementing the sending countdown times of all the Deadline queues will unlock the FIFO queue upon the arrival of a time interval of the cyclic timer, and the sending countdown times of all the Deadline queues will be automatically updated after the time interval of the cyclic timer, which means that the $CT_N$ of all the Deadline queues are updated, therefore, after the FIFO queue is unlocked, the old allowable queuing delay of the head packet will no longer be equal to the $CT_N$ of the Deadline queue 1, that is, the recorded allowable queuing delay of the head packet will be within the range of $[CT_1, CT_N]$ of the next Deadline queue, then the next Deadline queue is determined as the target forwarding queue, and the head packet can be immediately inserted into a target forwarding sub-queue with a corresponding countdown time in the target forwarding queue.

It is assumed that all the Deadline queues in the queue subsystem are target forwarding queues, and all the target forwarding sub-queues included in the Deadline queues are sorted in an ascending order according to their respective current countdown time D. In this case, the queue status of the outgoing port is shown in Fig. 11. When the sending countdown time of a certain Deadline queue decrements to 0 (i.e., the second preset time), this Deadline queue has the highest scheduling priority, and target packets cached in all target forwarding sub-queues contained in this Deadline queue are sent to the outgoing port immediately, wherein the current countdown times D of the target forwarding sub-queues are respectively 1us, 2us,..., MAX_D, where MAX_D is a non-negative number.

It may be understood that, in this example, the current countdown time D of the target forwarding sub-queue includes, but is not limited to, 1us, 2us,..., MAX_D, and the current countdown time of the target forwarding sub-queue may also take other values, which is not limited in this embodiment.

To describe the processing procedure of the packet scheduling method more clearly, some examples are described as follows for illustration.

Example 1:

In a network topology, a node R receives a series of packets from a certain incoming port of the node R, where packets P1-P5 are five packets belonging to the same data stream, and the five packets are sent at a source end almost at the same time. However, in a packet forwarding process, since respective packets are subjected to different interference delays, the time when the node R receives the packet P2 is later than the time when the node R receives the packet P1 by 1us, the time when the node R receives the packet P3 is later than the time when the node R receives the packet P2 by 1us, the time when the node R receives the packet P4 is later than the time when the node R receives the packet P3 by 1us, and the time when the node R receives the packet P5 is later than the time when the node R receives the packet P4 by 1us, that is to say, the node R successively receives the packet P1, the packet P2, the packet P3, the packet P4 and the packet P5, and the time delay difference between every two adjacent received packets is 1us. Therefore, on the node R, packets received later will have a smaller allowable queuing delay Q. As shown in Fig. 12, the allowable queuing delay Q of P1 is 25us, i.e., P1 (25), the allowable queuing delay Q of P2 is 24us, i.e., P2 (24), the allowable queuing delay Q of P3 is 23us, i.e., P3 (23), the allowable queuing delay Q of P4 is 22us, i.e., P4 (22), and the allowable queuing delay Q of P5 is 21us, i.e., P5 (21).

It is assumed that the authorization sending time AT of the Deadline queues (i.e., the forwarding queues) maintained by the node R is 10us, and the time interval I for decrementing the sending countdown times CT of the Deadline queues is 1us. Furthermore, it is assumed that the node R receives the packet P1 at time T0 and receives the packet P2 at time T0+1us, and so on.

If the Deadline queues set on the node R include queue-A, queue-B and queue-C, it is assumed that in the time interval from T0 to T0+1us, the CT of queue-A, the CT of queue-B and the CT of queue-C are 25us, 15us and 5us respectively, then within the time interval of T0+1us to T0+2us, the CT of queue-A, the CT of queue-B and the CT of queue-C are decremented to 24us, 14us, 4us, respectively.

Because the packet P1 and the packet P2 are received simultaneously within the time interval I from T0 to T0+1us, according to the related art, for example, the packets are enqueued according to a rule of $Q>=CT$, that is, when the allowable queuing delay of the packet is greater than or equal to the sending countdown time, the packet may be cached into the queue corresponding to the sending countdown time, therefore, according to this rule the packet P1 is inserted into queue-A, and the packet P2 is inserted into queue-B. Because the sending countdown time of queue-B is shorter than the sending countdown time of queue-A (i.e., compared with queue-A, queue-B schedules the packet P2 first), the node R will send the packet P2 first, and then sends the packet P1, therefore, disorder occurs between the packet P2 and the packet P1. Likewise, if the packets are enqueued according to a rule of $Q<=CT$, the problem of packet disorder will also exist. In order to avoid repetition and redundancy, the specific reasoning will not be repeated here.

Based on this, the allowable queuing delay may be compared with the first sending countdown time of the sending countdown time and the second sending countdown time of the sending countdown time to acquire a comparison result, and the packet may be scheduled according to the comparison result. The specific implementation process is as follows.

First, the CT of queue-A, the CT of queue-B, and the CT of queue-C in the time interval from T0 to T0+1us are modified to 34us, 24us, and 14us, respectively.

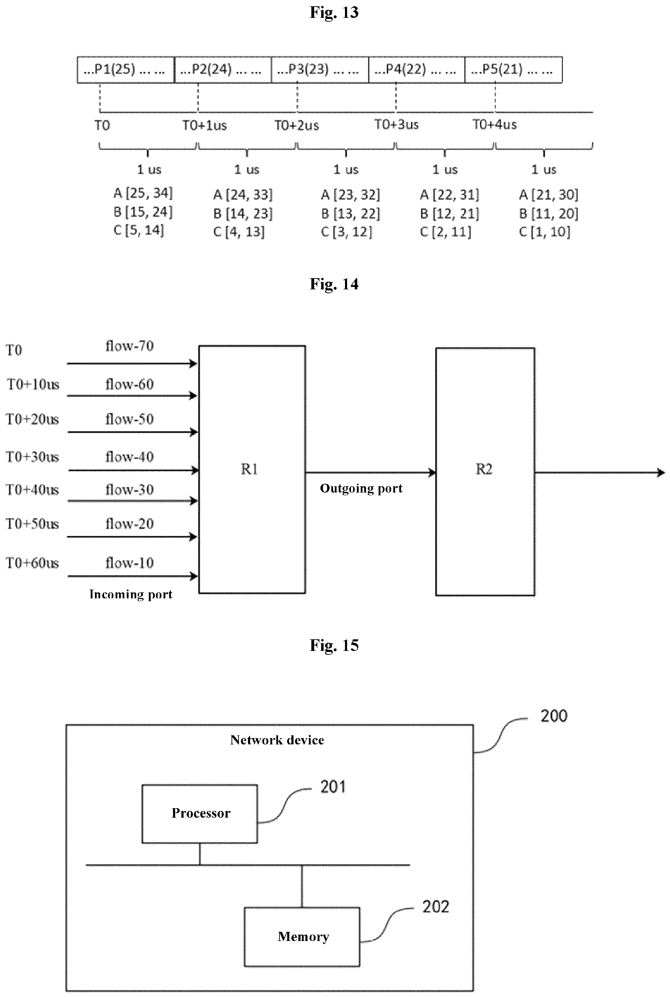

The foregoing series of packets (for example, packets P1~P5) enters the FIFO queue (i.e., the shaper queue) of the same shaper instance. As shown in Fig. 13, the first sending countdown time is recorded as $CT_1$, the second sending countdown time is recorded as $CT_N$. In the time interval from T0 to T0+1us, $[CT_1, CT_N]$ of queue-A of the queue subsystem is [25, 34], $[CT_1, CT_N]$ of queue-B of the queue subsystem is [15, 24], and $[CT_1, CT_N]$ of queue-C of the queue subsystem is [5, 14], then:

At time T0, a head packet P1 (i.e., a target packet) is acquired from the FIFO queue of the shaper instance, the allowable queuing delay Q of the head packet P1 is equal to 25, and since the $CT_1$ and the $CT_N$ of queue-A satisfy $25<=25<34$ (i.e., satisfy $CT_1<=Q<CT_N$), the packet P1 immediately enters queue-A; then, a head packet P2 is acquired from the FIFO queue of the shaper instance, the allowable queuing delay Q of the head packet P2 is equal to 24, and since the allowable queuing delay Q of the head packet P2 is equal to the $CT_N$ of queue-A (i.e., the allowable queuing delay of the target packet is equal to the second sending countdown time of the forwarding queue), the FIFO queue of the shaper instance will be locked (i.e., the head packet P2 temporarily retains in the shaper queue), the allowable queuing delay Q (i.e., Q=24) of the head packet P2 is recorded, and after waiting for a first preset time Twait (where $0<Twait<I$), the CT of the Deadline queue changes (i.e., $[CT_1, CT_N]$ of queue-A, $[CT_1, CT_N]$ of queue-B, and $[CT_1, CT_N]$ of queue-C decrement with the elapse of time), and at the same time, the FIFO queue of the shaper instance is also unlocked.

At time T0+1us, the packet P2 will immediately enter queue-A (the $[CT_1, CT_N]$ of queue-A has changed into [24, 33]) according to the recorded old allowable queuing delay Q (i.e., Q=24), because the $CT_1$ and the $CT_N$ of queue-A satisfy $24<=24<33$ (i.e., $CT_1<=Q<CT_N$).

Similarly, at time T0+2us, the packet P3 also enters queue-A; at time T0+3us, the packet P4 also enters queue-A; and at time T0+4us, the packet P5 also enters queue-A. To avoid redundant repetition, details are not described herein again. That is, the node R may send packets P1~P5 belonging to the same data stream in order.

It can be seen therefrom that the FIFO queue of the shaper instance and the packet scheduling method adopted in the present example (for example, packets are enqueued according to the rule of $CT_1<=Q<CT_N$) can solve the problem of packet disorder of the Deadline forwarding mechanism (for example, packets are enqueued according to the rule of $Q>=CT$, or packets are enqueued according to the rule of $Q<=CT$, etc.) in the related art, thereby being beneficial for satisfying the requirements of deterministic services.

Example 2:

As shown in Fig. 14, at time T0, the flow-70 reaches the node R1, the planned residence time of the packets in the flow-70 is 70us, and the allowable queuing delay Q of the packets in the flow-70 is also 70us; at time T0+10us, the flow-60 reaches the node R1, the planned residence time of the packets in the flow-60 is 60us, and the allowable queuing delay Q is 60us; by analogy, at time T0+60us, the flow-10 reaches the node R1, the planned residence time of the packets in the flow-10 is 10us, and the allowable queuing delay Q is 10us. It is assumed that these flows are all forwarded to the same outgoing port, the sending time required by each flow is 10us, and the sending of the packets cached in the Deadline queue (i.e., the forwarding queue) is controlled by using an on-time mode.

In the related art, assuming that at time T0, the CT (i.e., sending countdown time) of a certain Deadline queue-A is 70us, then the packets of the flow-70 enter queue-A; at time T0+10us, the CT of queue-A changes to 60us, then the packets of the flow-60 also enter queue-A; by analogy, the packets of the flow-50, the packets of the flow-40, the packets of the flow-30, the packets of the flow-20, and the packets of the flow-10 will enter queue-A successively. It is assumed that the AT (i.e., authorization sending time) of the Deadline queue is 70us, which means that the packets of these flows can be accommodated. Then, at time T0+70us, when the CT of queue-A decrements to 0, the packets begin to be sent, the packets of the flow-70 are sent within the first 10us, the packets of the flow-60 are sent within the second 10us, by analogy, the packets of the flow-10 are sent within the seventh 10us.

It can be seen that the packets of the flow-10 need to wait for 70us before being sent completely, which far exceeds the planned residence time 10us of the packets in the flow-10. This problem is also referred to as a Head of Line Blocking problem, and the manifestation of Head of Line Blocking is that the packets which enter the queue later will experience more delay. Even at downstream node R2, the allowable queuing delay for the packets in the flow-10 may be adjusted to speed up forwarding, the packets in the flow-10 are still in the same queue as the packets of the flow-70, the flow-60, the flow-50, the flow-40, the flow-30, and the flow-20 that arrive earlier, therefore, the packets in the flow-10 still faces a Head of Line Blocking problem.

However, according to the packet scheduling method of the embodiments of the present disclosure, queue-A is a logical virtual queue which actually includes a plurality of forwarding sub-queues, and different forwarding sub-queues correspond to different current countdown times. For example, the current countdown time corresponding to the forwarding sub-queue queue-A1 is 10us, and the current countdown time corresponding to the forwarding sub-queue queue-A2 is 20us, the rest may be deduced by analogy, and the current countdown time corresponding to the forwarding sub-queue queue-A7 is 70us. Therefore, packets in the different flows will enter different queues, that is, packets in the flow-10 enter queue-A1, packets in the flow-20 enter queue-A2, and by analogy, packets in the flow-70 enter queue-A7.

At time T0+70us, when the CT of the virtual queue of queue-A decrements to 0, the packets start to be sent, the packets in the forwarding sub-queue queue-A1 are sent in the first 10us, the packets in the forwarding sub-queue queue-A2 are sent in the second 10us, and by analogy, the packets in the forwarding sub-queue queue-A7 are sent in the seventh 10us. It can be seen that the packets of the flow-10 can be sent first, and therefore, the packet scheduling method according to the embodiments of the present disclosure can solve the Head of Line Blocking problem between different flows.

It should be noted that if the packets of the flow-70, the packets of the flow-60, the packets of the flow-50, the packets of the flow-40, the packets of the flow-30, and the packets of the flow-20 will respectively bring a delay error of 20us, 30us, 40us, 50us, 60us or 70us on the R1 node, but on the downstream node R2, the allowable queuing delays of the packets of the flow-70, the packets of the flow-60, the packets of the flow-50, the packets of the flow-40, the packets of the flow-30, and the packets of the flow-20 may be determined taking this delay error into account so that these packets all enter the most urgent queue. Furthermore, because these flows have different arrival time and are all sent immediately, these flows will not face the Head of Line Blocking problem.

It can be seen that, in this example, by using the packet scheduling method according to the embodiments of the present disclosure, the Head of Line Blocking problem of a Deadline forwarding mechanism in the related art can be remarkably alleviated, thereby being beneficial to meet a requirement of a deterministic service.

In addition, referring to Fig. 15, the embodiments of the present disclosure provide a network device. The network device 200 includes a memory 202, a processor 201, and a computer program stored on the memory 202 and operable on the processor 201.

The processor 201 and the memory 202 may be connected through a bus or in another manner.

As a non-transitory computer readable storage medium, the memory 202 may be configured to store a non-transitory software program and a non-transitory computer executable program. In addition, the memory 202 may include a high-speed random access memory, and may also include a non-transitory memory, for example, at least one magnetic disk storage device, a flash memory device, or another non-transitory solid-state storage device. In some embodiments, the memory 202 optionally includes a memory remotely located relative to the processor 201, which may be connected to the processor 201 over a network. Examples of such networks include, but are not limited to, the Internet, intranets, local area networks, mobile communication networks, and combinations thereof.

It should be noted that, the network device 200 in this embodiment may be applied to any node in the embodiment shown in Fig. 1. The network device 200 in this embodiment may form a part of a network topology in the embodiment shown in Fig. 1. These embodiments all belong to the same inventive concept, and therefore these embodiments have the same implementation principle and technical effects, and are not described in detail herein.

The non-transitory software programs and instructions required for implementing the packet scheduling method in the foregoing embodiments are stored in the memory 202, when executed by the processor 201, the packet scheduling method in the described embodiments is executed. For example, the described method operations S110 to S140 in Fig. 2, the method operations S210 to S220 in Fig. 3, the method operations S310 to S320 in Fig. 4, the method operations S410 to S420 in Fig. 5, the method operations S510 to S520 in Fig. 6, the method operations S610 to S620 in Fig. 7, the method operations S710 to S740 in Fig. 8, the method operations S810 to S830 in Fig. 9, and the method operations S910 to S920 in Fig. 10 may be executed.

The foregoing device embodiments are merely exemplary, and units described as separate parts may or may not be physically separate, may be located in one position, or may be distributed on a plurality of network units. A part or all of the modules may be selected according to actual needs to achieve the objectives of the solutions of the embodiments.

In addition, the embodiments of the present disclosure provide a computer readable storage medium. The computer readable storage medium stores computer executable instructions. The computer executable instructions may be executed by a processor or a controller, for example, executed by a processor in the foregoing device embodiment, so that the foregoing processor may be caused to execute the packet scheduling method in the foregoing embodiments, for example, the foregoing method operations S110 to S140 in Fig. 2, the method operations S210 to S220 in Fig. 3, the method operations S310 to S320 in Fig. 4, the method operations S410 to S420 in Fig. 5, the method operations S510 to S520 in Fig. 6, the method operations S610 to S620 in Fig. 7, the method operations S710 to S740 in Fig. 8, the method operations S810 to S830 in Fig. 9, and the method operations S910 to S920 in Fig. 10 may be executed.

In addition, the embodiments of the present disclosure provide a computer program product, including a computer program or computer instructions, the computer program or the computer instructions is/are stored in a computer readable storage medium, and the processor of the computer device reads the computer program or the computer instructions from the computer readable storage medium, the processor executes the computer program or the computer instructions, so that the computer device executes the packet scheduling method in the foregoing embodiments. For example, the above-described method operations S110 to S140 in Fig. 2, the method operations S210 to S220 in Fig. 3, the method operations S310 to S320 in Fig. 4, the method operations S410 to S420 in Fig. 5, the method operations S510 to S520 in Fig. 6, the method operations S610 to S620 in Fig. 7, the method operations S710 to S740 in Fig. 8, the method operations S810 to S830 in Fig. 9, and the method operations S910 to S920 in Fig. 10 may be performed.

According to the embodiments of the present disclosure, an allowable queuing delay of a target packet in a shaper queue is acquired, wherein the allowable queuing delay represents a maximum queuing duration that a packet waits to be sent in a forwarding queue; a sending countdown time of at least one forwarding queue is acquired, wherein the sending countdown time includes a first sending countdown time and a second sending countdown time, the first sending countdown time corresponds to a first sub-block in the forwarding queue, and the second sending countdown time corresponds to a last sub-block in the forwarding queue; then, the allowable queuing delay is compared with the first sending countdown time and the second sending countdown time to acquire a comparison result; and then the target packet is scheduled according to the comparison result. As such, the local node only needs to schedule the target packet according to the allowable queuing delay of the target packet and the sending countdown time of the forwarding queue, and it is not required to carry a local deadline stack in a packet, and therefore, the complexity of packet scheduling may be reduced.

Those having ordinary skill in the art may understand that all or some of the operations and systems in the methods disclosed in the foregoing may be implemented as software, firmware, hardware, and a proper combination thereof. Some or all of the physical components may be implemented as software executed by a processor, such as a central processor, digital signal processor, or microprocessor, or as hardware, or as an integrated circuit, such as an application specific integrated circuit. Such software may be distributed on computer readable media, which may include computer storage media (or non-transitory media) and communication media (or transitory media). As is well known to those having ordinary skill in the art, the term computer storage media includes both volatile and nonvolatile, removable and non-removable media implemented in any method or technology for storage of information such as computer readable instructions, data structures, program modules, or other data. Computer storage media includes, but is not limited to, Random Access Memory (RAM), Read-Only Memory (ROM), Electrically Erasable Programmable Read-Only Memory (EEPROM), flash memory or other memory technology, Compact Disc Read-Only Memory (CD-ROM), Digital Versatile Discs (DVD) or other optical disk storage, magnetic cassettes, magnetic tape, magnetic disk storage or other magnetic storage devices, or any other medium which can be used to store the desired information and which can be accessed by a computer. In addition, communication media typically embodies computer readable instructions, data structures, program modules, or other data in a modulated data signal such as a carrier wave or other transport mechanism and may include any information delivery media as is known to those having ordinary skill in the art.

**Claims**

1. A packet scheduling method, comprising:

   acquiring an allowable queuing delay of a target packet in a shaper queue, wherein the allowable queuing delay represents a maximum queuing duration that a packet waits to be sent in a forwarding queue;
   acquiring a sending countdown time of at least one forwarding queue, wherein the sending countdown time comprises a first sending countdown time and a second sending countdown time, the first sending countdown time corresponds to a first sub-block in the forwarding queue, and the second sending countdown time corresponds to a last sub-block in the forwarding queue;
   comparing the allowable queuing delay with the first sending countdown time and the second sending countdown time to acquire a comparison result; and
   scheduling the target packet according to the comparison result.

2. The packet scheduling method according to claim 1, wherein the scheduling the target packet according to the comparison result comprises:

   determining at least one target forwarding queue according to the comparison result; and
   caching the target packet in the target forwarding queue, and waiting for the target forwarding queue to schedule the target packet.

3. The packet scheduling method according to claim 1, wherein there are a plurality of forwarding queues, different forwarding queues correspond to different sending countdown times, and different sending countdown times comprise different first sending countdown times and different second sending countdown times;
   the comparing the allowable queuing delay with the first sending countdown time and the second sending countdown time to acquire the comparison result comprises:

   comparing the allowable queuing delay with the first sending countdown times and the second sending countdown times of the plurality of forwarding queues; and
   in a case where there exists a forwarding queue among the plurality of forwarding queues that enables the allowable queuing delay to be greater than or equal to the first sending countdown time and less than the second sending countdown time, acquiring a comparison result indicating that the allowable queuing delay is greater than or equal to the first sending countdown time and less than the second sending countdown time.

4. The packet scheduling method according to claim 2, wherein the determining the at least one target forwarding queue according to the comparison result comprises:
   in a case where the comparison result indicates that the allowable queuing delay is greater than or equal to the first sending countdown time and less than the second sending countdown time, determining a forwarding queue that enables the allowable queuing delay to be greater than or equal to the first sending countdown time and less than the second sending countdown time as the target forwarding queue.

5. The packet scheduling method according to claim 1, wherein there are a plurality of forwarding queues, different forwarding queues correspond to different sending countdown times, and different sending countdown times comprise different first sending countdown times and different second sending countdown times;
   the comparing the allowable queuing delay with the first sending countdown time and the second sending countdown time to acquire the comparison result comprises:

   comparing the allowable queuing delay with the first sending countdown times and the second sending countdown times of the plurality of forwarding queues; and
   in a case where there is a forwarding queue among the plurality of forwarding queues that enables the allowable queuing delay to be greater than or equal to the second sending countdown time with a maximum numerical value, acquiring a comparison result indicating that the allowable queuing delay is greater than or equal to the second sending countdown time with the maximum numerical value.

6. The packet scheduling method according to claim 2, wherein the determining the at least one target forwarding queue according to the comparison result comprises:

   in a case where the comparison result indicates that the allowable queuing delay is greater than or equal to the

16

second sending countdown time with a maximum numerical value, determining a forwarding queue corresponding to the second sending countdown time with the maximum numerical value as the target forwarding queue; or,

in a case where the comparison result indicates that the allowable queuing delay is greater than or equal to the second sending countdown time with the maximum numerical value, configuring an escape queue, and determining the escape queue as the target forwarding queue, wherein the sending countdown time of the escape queue is greater than the second sending countdown time with the maximum numerical value.

7. The packet scheduling method according to claim 1, wherein there are a plurality of forwarding queues, different forwarding queues correspond to different sending countdown times, and different sending countdown times comprise different first sending countdown times and different second sending countdown times;
the comparing the allowable queuing delay with the first sending countdown time and the second sending countdown time to acquire the comparison result comprises:

comparing the allowable queuing delay with the first sending countdown times and the second sending countdown times of the plurality of forwarding queues; and
in a case where there exists a forwarding queue among the plurality of forwarding queues that enables the allowable queuing delay to be equal to the second sending countdown time, acquiring a comparison result indicating that the allowable queuing delay is equal to the second sending countdown time.

8. The packet scheduling method according to claim 1, wherein the scheduling the target packet according to the comparison result comprises:

in a case where the comparison result indicates that the allowable queuing delay is equal to the second sending countdown time, temporarily retaining the target packet in the shaper queue, and after waiting for a first preset time, re-comparing the allowable queuing delay with the first sending countdown time and the second sending countdown time to acquire a new comparison result; and
scheduling the target packet according to the new comparison result.

9. The packet scheduling method according to claim 8, wherein the re-comparing the allowable queuing delay with the first sending countdown time and the second sending countdown time comprises:

acquiring an authorization sending time, wherein the authorization sending time represents a longest duration allowed for the forwarding queue to send the packet;
acquiring a time interval according to the authorization sending time;
decrementing the first sending countdown time and the second sending countdown time according to the time interval to acquire a new first sending countdown time and a new second sending countdown time; and
re-comparing the allowable queuing delay with the new first sending countdown time and the new second sending countdown time.

10. The packet scheduling method according to claim 2, wherein the target forwarding queue comprises a plurality of forwarding sub-queues, different forwarding sub-queues correspond to a same sending countdown time, and different forwarding sub-queues correspond to different current countdown times;
the caching the target packet in the target forwarding queue comprises:

acquiring a planned residence time of the target packet, wherein the planned residence time represents a maximum residence time of the packet in a local node;
determining, from the plurality of forwarding sub-queues, a forwarding sub-queue with the current countdown time corresponding to the planned residence time of the target packet as a target forwarding sub-queue; and
caching the target packet in the target forwarding sub-queue.

11. The packet scheduling method according to claim 10, further comprising:

determining a sending order of the target forwarding sub-queue according to the current countdown time; and
in a case where the sending countdown time is a second preset time, sending the target forwarding sub-queue according to the sending order.

12. The packet scheduling method according to claim 2, wherein there are a plurality of forwarding queues, different forwarding queues correspond to different storage spaces, and there are a plurality of target forwarding queues; and the packet scheduling method further comprises:

in a case where the storage space corresponding to a current target forwarding queue is exhausted, prohibiting caching the target packet in the current target forwarding queue, and caching the target packet in a next target forwarding queue.

13. A network device, comprising a memory, a processor and a computer program stored in the memory and operable on the processor, wherein the processor, when executing the computer program, implements the packet scheduling method according to any one of claims 1 to 12.

14. A computer readable storage medium, storing computer executable instructions, wherein the computer executable instructions are used for executing the packet scheduling method according to any one of claims 1 to 12.

15. A computer program product comprising a computer program or computer instructions, wherein the computer program or computer instructions are stored in a computer readable storage medium, a processor of a computer device reads the computer program or the computer instructions from the computer readable storage medium, and executes the computer program or the computer instructions, so that the computer device executes the packet scheduling method according to any one of claims 1 to 12.

Fig. 1

Fig. 2

| Acquiring an allowable queuing delay of a target packet in a shaper queue | S110 |

| Acquiring a sending countdown time of at least one forwarding queue, wherein the sending countdown time includes a first sending countdown time and a second sending countdown time | S120 |

| Comparing the allowable queuing delay with the first sending countdown time and the second sending countdown time to acquire a comparison result | S130 |

| Scheduling the target packet according to the comparison result | S140 |

Fig. 3

| Determining at least one target forwarding queue according to the comparison result | S210 |

| Caching the target packet in the target forwarding queue, and waiting for the target forwarding queue to schedule the target packet | S220 |

Fig. 4

| Comparing the allowable queuing delay with the first sending countdown times and the second sending countdown times of the plurality of forwarding queues | S310 |

↓

| In a case where there exists a forwarding queue among the plurality of forwarding queues that enables the allowable queuing delay to be greater than or equal to the first sending countdown time and less than the second sending countdown time, acquiring a comparison result indicating that the allowable queuing delay is greater than or equal to the first sending countdown time and less than the second sending countdown time | S320 |

Fig. 5

| Comparing the allowable queuing delay with the first sending countdown times and the second sending countdown times of the plurality of forwarding queues | S410 |

↓

| In a case where there is a forwarding queue among the plurality of forwarding queues that enables the allowable queuing delay to be greater than or equal to the second sending countdown time with a maximum numerical value, acquiring a comparison result indicating that the allowable queuing delay is greater than or equal to the second sending countdown time with the maximum numerical value | S420 |

Fig. 6

| Comparing the allowable queuing delay with the first sending countdown times and the second sending countdown times of the plurality of forwarding queues | S510 |

↓

| In a case where there exists a forwarding queue among the plurality of forwarding queues that enables the allowable queuing delay to be equal to the second sending countdown time, acquiring a comparison result indicating that the allowable queuing delay is equal to the second sending countdown time | S520 |

**Fig. 7**

In a case where the comparison result indicates that the allowable queuing delay is equal to the second sending countdown time, temporarily retaining the target packet in the shaper queue, and after waiting for a first preset time, re-comparing the allowable queuing delay with the first sending countdown time and the second sending countdown time to acquire a new comparison result — S610

Scheduling the target packet according to the new comparison result — S620

**Fig. 8**

Acquiring an authorization sending time — S710

Acquiring a time interval according to the authorization sending time — S720

Decrementing the first sending countdown time and the second sending countdown time according to the time interval to acquire a new first sending countdown time and a new second sending countdown time — S730

Re-comparing the allowable queuing delay with the new first sending countdown time and the new second sending countdown time — S740

**Fig. 9**

Acquiring a planned residence time of the target packet — S810

Determining, from the plurality of forwarding sub-queues, a forwarding sub-queue with the current countdown time corresponding to the planned residence time of the target packet as a target forwarding sub-queue — S820

Caching the target packet in the target forwarding sub-queue — S830

**Fig. 10**

| | |
|---|---|
| Determining a sending order of the target forwarding sub-queue according to the current countdown time | S910 |

| | |
|---|---|
| In a case where the sending countdown time is a second preset time, sending the target forwarding sub-queue according to the sending order | S920 |

**Fig. 11**

Incoming port 1 — SF

Incoming port 2 — SF

Incoming port m — SF

Shaper instance 1
FIFO queue — Locked?

Shaper instance 2
FIFO queue — Locked?

Shaper instance n
FIFO queue — Locked?

**Shaper**

Sending countdown time=0
D=1us
D=2us
. . . . .
D=MAX_D

Sending countdown time=10us
D=1us
D=2us
. . . . .
D=MAX_D

Sending countdown time=MAX_D
D=1us
D=2us
. . . . .
D=MAX_D

**Deadline queue**

Outgoing port

**Fig. 12**

| ...P1(25) ... ... | ...P2(24) ... ... | ...P3(23) ... ... | ...P4(22) ... ... | ...P5(21) ... ... |
|---|---|---|---|---|

T0          T0+1us          T0+2us          T0+3us          T0+4us

1 us          1 us          1 us          1 us          1 us

queue-A 25     queue-A 24     queue-A 23     queue-A 22     queue-A 21
queue-B 15     queue-B 14     queue-B 13     queue-B 12     queue-B 11
queue-C 5      queue-C 4      queue-C 3      queue-C 2      queue-C 1

**Fig. 13**

| ...P1(25) ... ... | ...P2(24) ... ... | ...P3(23) ... ... | ...P4(22) ... ... | ...P5(21) ... ... |

T0   T0+1us   T0+2us   T0+3us   T0+4us

| 1 us | 1 us | 1 us | 1 us | 1 us |
|------|------|------|------|------|
| A [25, 34] | A [24, 33] | A [23, 32] | A [22, 31] | A [21, 30] |
| B [15, 24] | B [14, 23] | B [13, 22] | B [12, 21] | B [11, 20] |
| C [5, 14] | C [4, 13] | C [3, 12] | C [2, 11] | C [1, 10] |

**Fig. 14**

T0   flow-70

T0+10us   flow-60

T0+20us   flow-50

T0+30us   flow-40

T0+40us   flow-30

T0+50us   flow-20

T0+60us   flow-10

Incoming port

R1

Outgoing port

R2

**Fig. 15**

Network device   200

Processor   201

Memory   202

## INTERNATIONAL SEARCH REPORT

| International application No. |
|---|
| **PCT/CN2023/102437** |

### A. CLASSIFICATION OF SUBJECT MATTER

H04L47/50(2022.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT; VEN; CNKI; ENTXT: 队列, 调度, 选择, 允许, 最大, 排队, 等待, 时延, 延时, 时间, 倒计时, queue, schedul+, select +, allow+, max+, waiting, queue up, delay, time, countdown

### C. DOCUMENTS CONSIDERED TO BE RELEVANT

| Category* | Citation of document, with indication, where appropriate, of the relevant passages | Relevant to claim No. |
|---|---|---|
| A | CN 111431822 A (WANG QINSI) 17 July 2020 (2020-07-17) description, paragraphs [0020]-[0045] | 1-15 |
| A | CN 110166380 A (HUAWEI TECHNOLOGIES CO., LTD.) 23 August 2019 (2019-08-23) description, paragraphs [0051]-[0127] | 1-15 |
| A | CN 108632162 A (HUAWEI TECHNOLOGIES CO., LTD.) 09 October 2018 (2018-10-09) entire document | 1-15 |
| A | CN 114143378 A (HANGZHOU H3C TECHNOLOGIES CO., LTD.) 04 March 2022 (2022-03-04) entire document | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 August 2023** | **28 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/102437**

| Patent document cited in search report | | | Publication date (day/month/year) | Patent family member(s) | | | Publication date (day/month/year) |
|---|---|---|---|---|---|---|---|
| CN | 111431822 | A | 17 July 2020 | None | | | |
| CN | 110166380 | A | 23 August 2019 | WO | 2019157978 | A1 | 22 August 2019 |
| CN | 108632162 | A | 09 October 2018 | None | | | |
| CN | 114143378 | A | 04 March 2022 | None | | | |

Form PCT/ISA/210 (patent family annex) (July 2022)

**EP 4 576 725 A1**

**Patent documents cited in the description**

- CN 202211126319X